# EUROPÄISCHE PATENTSCHRIFT

(11) **EP 2 938 980 B1**
(45) Veröffentlichungstag und Bekanntmachung des Hinweises auf die Patenterteilung: **26.07.2017**
(21) Anmeldenummer: 13817935.3
(22) Anmeldetag: 23.12.2013
(51) Int. Cl.: G01J 5/10, G01K 17/20, G01K 17/00

(54) **WÄRMEFLUSSSENSOR**
HEAT FLOW SENSOR
CAPTEUR DE FLUX THERMIQUE

(30) Priorität: 28.12.2012 CH 29922012
(43) Veröffentlichungstag der Anmeldung: 04.11.2015
(73) Patentinhaber: Greenteg AG, 8005 Zürich (CH)
(72) Erfinder: DURRER, Lukas, CH-9642 Ebnat-Kappel (CH); HELBLING, Thomas, CH-8500 Frauenfeld (CH); SCHWYTER, Etienne, CH-6343 Buonas (CH); GLATZ, Wulf, CH-8005 Zürich (CH); STEIN, Peter, CH-8004 Zürich (CH)
(74) Vertreter: Schneider Feldmann AG Patent- und Markenanwälte
(86) Internationale Anmeldenummer: PCT/EP2013/077912
(87) Internationale Veröffentlichungsnummer: WO 2014/102242

(56) Entgegenhaltungen:
- US-A- 3 525 648
- US-A- 4 197 738
- US-A1- 2005 105 582
- US-B1- 6 278 051

## Beschreibung

Die vorliegende Erfindung richtet sich auf einen Wärmeflusssensor (WFS) und dessen Verwendung.

Wärmeflusssensoren messen die Wärmeenergie die pro Zeiteinheit von einer wärmeren zu einer kälteren Seite fliesst (Wärmeleistung, Wärmefluss). In der Anwendung wird der flächige WFS an das Objekt von Interesse angebracht oder in dieses integriert. Integrations- und Anwendungsbeispiele finden sich z. B. bei VAN DER GRAAF. Der Wärmefluss wird gemessen, indem eine von der Grösse des durch die Fläche des Sensors fliessenden Wärmeflusses abhängige Spannung erzeugt wird. WFS sind bekannt und werden bereits industriell eingesetzt, z. B. unter der Bezeichnung Hukseflux, Sequoia, Captec und weitere).

Wärmeflusssensoren, werden unter anderem in der Gebäudetechnik zum Messen der Güte der thermischen Isolierung von Wänden verwendet oder in der Kalorimetrie zum Messen von chemischen Reaktionsenergien oder zur Messung der Energie von elektromagnetischer Strahlung.

Wärmeflusssensoren gemäss Stand der Technik können in drei verschieden Kategorien eingeteilt werden. In dicke Wärmeflusssensoren (Dicke an der dünnsten Stelle > 1mm), in miniaturisierte Wärmeflusssensoren, die mit Complementary Metal Oxide Semiconductor (CMOS) Technik hergestellt werden und in dünne Wärmeflusssensoren mit einer Gesamtdicke < 1mm. Dicke Wärmeflusssensoren (>1mm) weisen auf Grund ihres Aufbaus und ihrer Schutzhülle bei einer angenommenen thermischen Leitfähigkeit von 0.4 W/m/K einen sehr hohen flächennormierten thermischen Widerstand von 30 cm^2*K/W bis mehrere 100 cm^2*K/W auf. Da dieser thermische Widerstand den zu messenden thermischen Fluss beeinflusst resp. verringert, wird das Messresultat des wirklichen anliegenden thermischen Flusses verfälscht (Invasivität).

Dünne Wärmeflusssensoren verfälschen das Messresultat wegen ihrer geringen Dicken und dementsprechend geringerer Invasivität weniger als dicke Wärmeflusssensoren. Dünne Wärmeflusssensoren haben jedoch den Nachteil sogenannter Mikroeffekten [siehe VAN DER GRAAF, Seite 312 ff, Kapitel 8.2.5]. Dieser Nachteil kann durch eine thermisch gut leitende Homogenisierungsschicht auf der warmen und kalten Seite des Sensors entgegengewirkt werden.

US2005/0105582 A1 zeigt einen Aufbau von dünnen Wärmeflusssensoren, welche auf Basis lateraler Verzerrung des Wärmeflusses arbeiten. Bei diesem Sensor ist das thermoelektrisch aktive Material bedingt durch den Herstellungsprozess auf dünne Polyimidfolien aufgebracht. Die Polyimidfolien bilden eine abgeschlossene Fläche rechtwinklig zum Wärmefluss. Da Polymerfolien (z.B. Polyimid) eher niedrige thermische Leitfähigkeiten haben (∼0.2 - 0.6 W/m/K) im Vergleich zu Metallen oder Keramiken, stellen diese Folien einen nicht zu vernachlässigbaren thermischen Widerstand dar, bezogen auf den thermischen Gesamtwidertand des Sensors.

Der Aufbau des in US2005/0105582 A1 beschriebenen Sensors ist ebenfalls in [Ph Herin and P Thery, Meas. Sci. Technol. 3 (1992) 495-500] gezeigt. Demzufolge sind die Sensoren von Captec oben und unten mit einer Polymerfolie eingepackt. Diese Polymerfolie bietet Schutz vor äusseren Einflüssen und vor elektrischen Durchschlägen. Auf dieser Folie ist ein Thermoleitelement aus einer Cu-Folie angebracht. Solche Thermoleitelemente sind wichtig zur Homogenisierung des thermischen Flusses zur Unterdrückung der Mikroeffekte.

Ein anderer Ansatz dünner Wärmeflusssensoren ist in US 3607445 beschrieben. Es sind dünne Thermopaare auf eine Polymerfolie aufgebracht und so gefaltet und verpackt, dass ein Temperaturunterschied über der dünnen Polymerfolie zu einer unterschiedlichen Temperatur der Thermopaare führt und dadurch über den thermoelektrischen Effekt eine elektrische Spannung induziert wird. Dieser Sensor ist gegen die heisse und kalte Seite mit einer dünnen Polymerfolie bedeckt. Diese insgesamt drei Lagen einer dünnen Polymerfolie führen zu einer hohen thermischen Invasivität des Sensors, auch wenn der Sensor sehr dünn ist. US 4,197,738 beschreibt einen Wärmeflusssensor, der eine Anordnung von in einer Matrix eingebetteten Thermosäulen umfasst.

Die Erfindung liegt daher die Aufgabe zugrunde, einen Wärmeflusssensor (WFS) zu entwickeln welcher eine möglichst geringe thermische Invasivität aufweist und trotzdem robust genug ist um den Anforderungen einzelner Anwendungen zu genügen.

Diese Aufgabe ist mit den Merkmalen des Patentanspruchs 1 gelöst. Es wird eine Gestaltung von WFS vorgeschlagen, deren spezieller Verpackungsaufbau nur einen geringen thermischen Widerstand aufweist und trotzdem noch genügend Schutz vor elektrischen, thermischen und chemischen Einflüssen bietet.

Dies wird dadurch ermöglicht, dass das aktive Sensorelement mit einer hauchdünnen, elektrisch stark isolierenden, chemisch inerten und stark haftenden Schutzschicht überzogen ist. Auf diese Schutzschicht ist auf den flächigen Seiten des Sensors rechtwinklig zum Wärmefluss ein thermisch hochleitfähiges Thermoleitelement, bevorzugt mittels eines hauchdünnen Klebers angeklebt.

Die Schutzschicht ist vorzugsweise in Form einer konformen Beschichtung ausgestaltet, welche sich an die Oberflächenstruktur des Wärmeflusssensors anpasst.

Da der thermische Widerstand bei der Verringerung der Schichtdicke eines Materials linear abnimmt, ermöglicht dieser Aufbau eine Reduktion der Invasivität des Wärmeflusssensors.

Für eine weitere Reduktion der Invasivität sind die sensoraktiven Materialien vom p- und n-Typ nicht zwischen zwei Folien sondern in durchkontaktierten Löchern einer Folie (Matrix) angebracht. So angeordnete thermoelektrisch aktive p- und n-dotierte Materialien können auch als Thermosäulen bezeichnet werden. Diese werden miteinander auf der flächigen Ober- und Unterseite der Matrix miteinander elektrisch in Serie oder parallel durch elektrische Leiterbahnen (Schaltelemente) verbunden.

Die Thermosäulen können gefüllt oder hohl sein. Im Falle einer hohlen Säule kann es sein, dass die innere, dem Hohlraum zugewandte Seite mit einer hauchdünnen Schutzschicht überzogen, oder der Hohlraum vollständig mit dieser Schutzschicht ausgefüllt ist. Um die Invasivität weiter zu verringern, kann der Hohlraum, durch ein thermisch leitendes jedoch elektrisch isolierendes Material wie zum Beispiel einen thermisch leitfähigen Kleber gefüllt sein.

Thermoelektrisch aktive Materialien die im Sensor verwendet werden können sind zum Beispiel Ni, Cu, Konstantan, Bi2Te3 und/oder weitere thermoelektrische Materialien.

Die so parallel zum Wärmefluss angeordneten Materialien gewähren durch ihre um einen Faktor 5 bis 10000fach bessere thermische Leitfähigkeit, im Vergleich mit Polymeren einen erhöhten Wärmefluss von der kalten zur warmen Seite des Sensors und reduzieren dadurch die Invasivität des Sensors zusätzlich zu der optimierten Verpackung.

Vorteilhaft ist an dieser Anordnung, dass die äussere Fläche der Thermosäulen nicht von thermisch schlecht leitenden Medien wie Luft oder Vakuum umgeben sind, sondern dass sie in einem thermisch besser leitenden Material wie Polymere verankert sind. Polymere haben eine 10-20-mal höhere thermische Leitfähigkeit als Luft. Dadurch fliesst die Wärmeenergie nicht nur durch die Thermosäulen sondern ein grosser Teil auch durch das Polymer. Diese Anordnung wirkt sich zusätzlich positiv auf die Verringerung der Invasivität aus.

Weitere vorteilhafte Ausgestaltungen sind in den abhängigen Ansprüchen offenbart. Die elektrisch isolierende und chemisch inerte Schutzschicht sollte eine Dicke aufweisen, die genügend ist um den Produktanforderungen zu genügen, jedoch anderseits möglichst dünn und homogen sein, damit die thermische Leitfähigkeit des gesamten Sensors erhöht wird. Anforderungen an die elektrisch Isolationsfestigkeit (Durchschlagsfestigkeit) und chemisch Festigkeit der Schutzschicht des WFS beziehen sich auf branchentypische Alterungstests und Schutztests welche die Schicht überstehen muss, wie thermisches Zyklikern, HAST Tests (Hilty Accelerated Stress Test) oder Test gegen elektrostatischen Durchschlag sowie Wasserdichtigkeit. Je nach Material beträgt diese Schutzschicht zwischen 0.1um bis 20um, vorzugsweise zwischen 0.1 und 10um und am meisten bevorzugt zwischen 0.1 und 7um. Vorteilhafte Materialien sind Schutzlacke wie Acryllack oder Epoxidharze, welche über Tauchbeschichtung, Spincoating oder Spraycoating aufgetragen werden können. Auch Keramiken, insbesondere Al2O3, welche durch Sputtering, Evaporieren von Aluminium und anschliessendem Eloxieren oder durch "Atomic Layer Deposition" aufgebracht werden, können dazu verwendet werden. Evaporation von Beschichtungen von sehr stabilen organischen Molekülen wie Parylen stellen weitere Möglichkeiten dar, eine gute Schutzschicht aufzubauen.

Hohe Anforderungen werden auch an die Klebschicht gestellt. Diese Klebeschicht muss so dick gewählt sein, dass allenfalls Unebenheiten auf der Oberfläche des aktiven Sensorelements ausgeglichen werden, und die Haftung muss stark genug sein, so dass die Schicht nicht delaminiert werden kann. Sie muss zugleich dünn genug sein, damit der thermische Widerstand möglichst gering bleibt. Die Dicke dieser Klebschicht sollte zwischen 1um und 100um betragen, vorzugsweise zwischen 5um und 30um.

Die Erfindung wird nachfolgend in Ausführungsbeispielen anhand einer Zeichnung näher beschrieben. In der Zeichnung zeigen die
- Fig. 1:: Funktionsprinzip eines WFS sowie typische Anwendungsbeispiele (a-c)
- Fig. 2:: Aufbau einer WFS Verpackung anhand der Stand der Technik (a-b)
- Fig. 3:: erfindungsgemässer Aufbau von WFS (a-d).

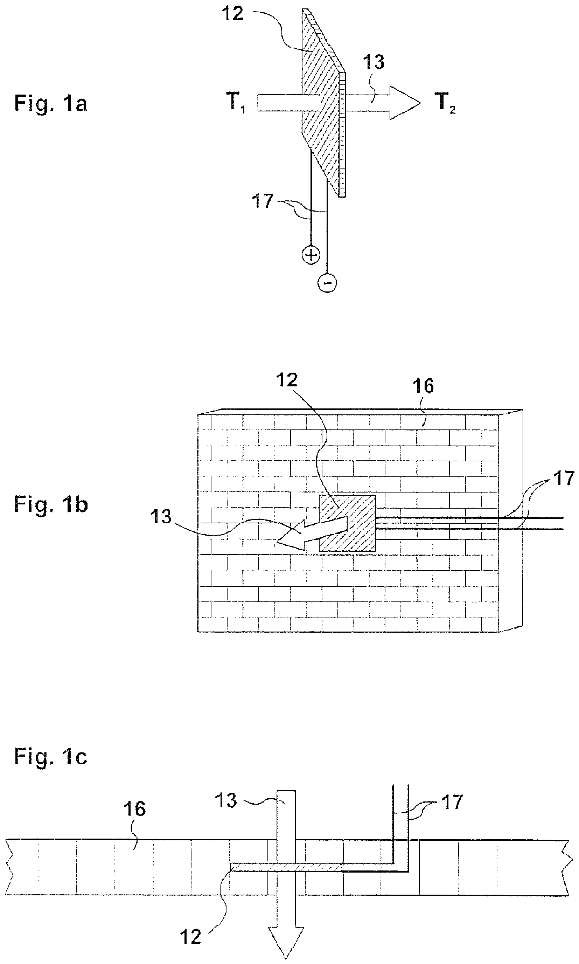

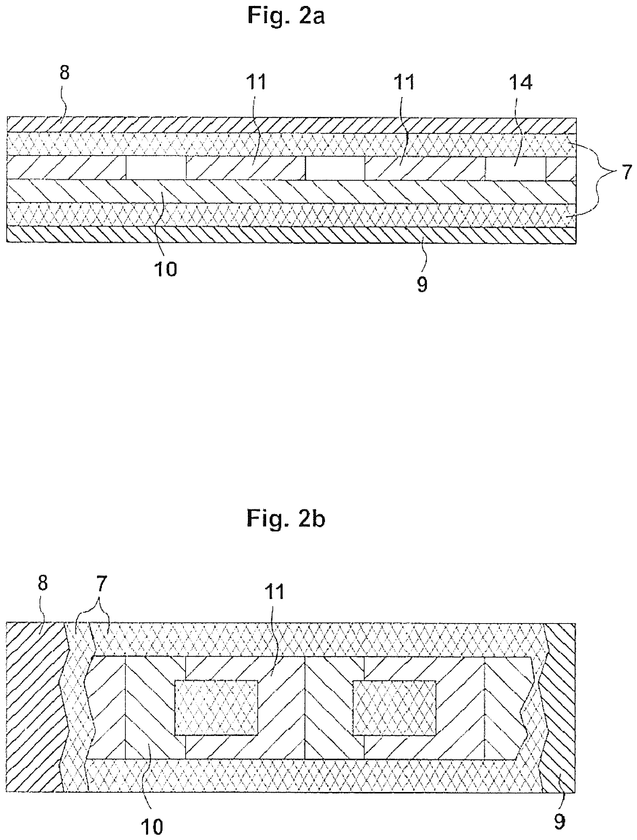

Eine schematische Darstellung eines WFS ist in Figur 1a gezeigt. Der Wärmeflusssensor 12 wird von einem Wärmefluss 13 durchdrungen. Der Wärmefluss 13 fliesst von der warmen Seite mit Temperatur T1 auf die kalte Seite mit Temperatur T2. Die durch den Wärmefluss 13 in den WFS 12 induzierte elektrische Spannung wird an den elektrisch leitfähigen Kabel 17 gemessen. Die Verwendung eines solchen Sensors ist in Figur 1b und Figur 1c dargestellt. In Figur 1b ist der WFS auf ein Messobjekt (z.B. eine Wand) aufgebracht. Der durch die Wand fliessende Wärmefluss 13 welcher auch den WFS 12 durchdringt wird durch die am WFS eingeprägte elektrische Spannung an den elektrisch leitfähigen Drähten 17 mit einem Spannungsmessgerät (Voltmeter) gemessen. In Figur 1c ist der WFS 12 in ein Messobjekt (z.B. Wand) 16 eingebaut und wird vom Messobjekt umgeben. Der durch die Wand fliessende Wärmefluss 13 welcher auch den WFS 12 durchdringt wird durch die am WFS eingeprägte elektrische Spannung an den elektrisch leitfähigen Drähten 17 mit einem Spannungsmessgerät (Voltmeter) gemessen. Ein WFS in der Ausführung nach dem eingangs beschriebenen Stand der Technik ist aus der Figur 2 ersichtlich. Figur 2a zeigt einen Querschnitt durch den aus Konstantan 10 und Kupfer 11 bestehenden Wärmeflusssensor, der mit einer Schutzschicht aus einer thermisch invasiven Polymerfolie, zumeist Polyimid (Kapton) 7 und einem typischem Wärmeleitelement (heat conductive plate) auf der kalten Seite 8 und warmen Seite 9 versehen ist. Der Sensor ist nicht mit einer hauchdünnen, elektrisch isolierenden und chemisch inerten Schutzschicht überzogen.

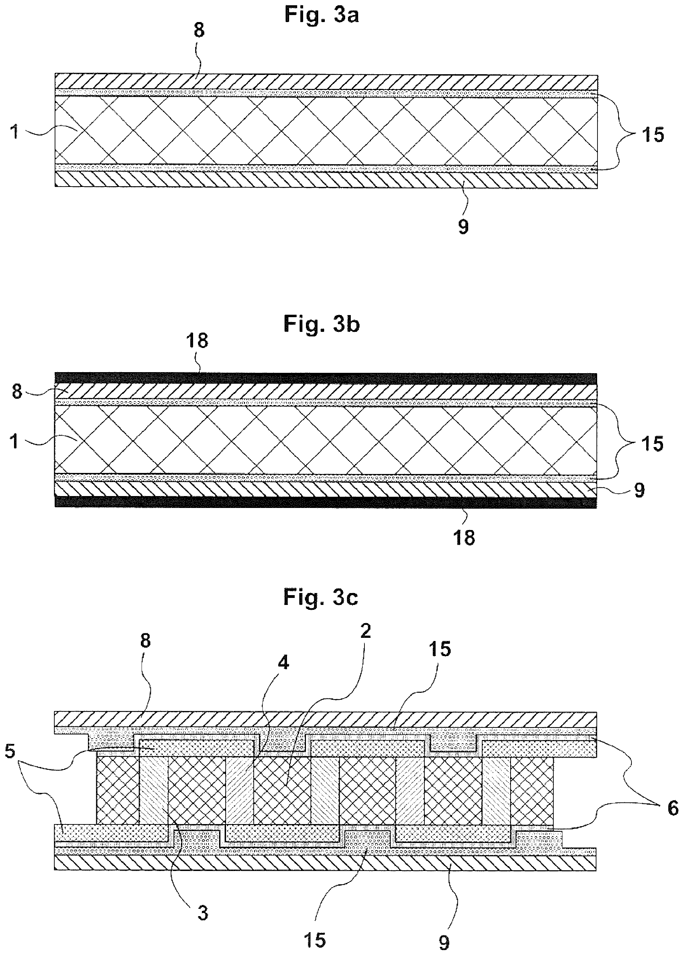

Die Ausführungsform in Figur 3a zeigt hingegen den erfindungsgemässen Verpackungsaufbau eines nur wenig invasiven WFS. Die flächigen Seiten des Sensorelements 1 des Wärmeflusssensors sind mit einer hauchdünnen Schutzschicht 6 überzogen und mit einem thermisch leitfähigen Kleber 15 mit den Wärmeleitelementen 8, 9 verbunden.

Vorteilhafte Materialien der hauchdünnen Schutzschicht sind Schutzlacke wie Acryllack, Epoxidharze oder auf Si-basierende Kleber welche mit Dipcoating (Tauchbeschichtung), Spincoating oder Spraycoating auf die flächigen Seiten des Wärmeflusssensors 1 aufgetragen werden können. Keramiken, insbesondere Al2O3, welches durch Sputtering, Evaporieren von Al und anschliessendem Eloxieren oder durch "Atomic Layer Deposition" auf die flächigen Seiten des Sensorelement 1 aufgetragen werden, sind ebenso geeignete Materialien. Beschichtungen die durch das Evaporieren sehr stabiler organischer Molekülen wie Parylene aufgetragen werden können, sind eine weitere Möglichkeit für eine gute Schutzschicht 6. Die Schutzschicht 6 kann auch aus einem thermisch leitenden Acryllack, Epoxidharz oder einem auf Si-basierendem Kleber bestehen.

Die Schutzschicht 6 soll eine Dicke von weniger als 20um, vorzugsweise von weniger als 10um aufweisen und besonders bevorzugt weniger als 7um.

Das Wärmeleitelement 8, 9 kann aus Cu, Au, Pd, Al, Sb, Stahl oder einem anderen Metall bestehen oder ebenso aus Keramik oder Graphit gebildet sein oder eine Kombination von diesen Materialien.

Wie in der Ausführungsform der Figur 3b dargestellt, kann das Wärmeleitelement 8, 9 funktional beschichtet sein (Schicht 18). Diese Funktionalität kann beispielsweise eine elektromagnetische Strahlung stark absorbierende Schicht im Wellenlängenbereich 0.2um bis 10.6um sein oder eine mit Biomolekülen oder Biozellen, z. B. mit Antikörpern versehene Schicht sein.

Das Wärmeleitelement 8, 9 kann so ausgeführt werden, dass es die Dimensionen des Sensorelements 1 überragt und eine hohe Wärmekapazität aufweist.

Das Wärmeleitelement 8, 9 kann weiter so ausgeführt sein, dass es in flächige Segmente unterteilt ist. Der Gesamtwärmefluss wird dadurch auf diese Segmente aufgeteilt. Dies ist vorteilhaft für die örtliche Auflösung des Wärmeflusses bei Anwendungen mit inhomogenen Flüssen.

Die Klebschicht 15, welche das Wärmeleitelement8, 9 an der Ober- und Unterseite des Sensorelements 1 befestigt, besteht aus einem Kleber und weist eine Dicke kleiner 100um, vorzugsweise von weniger als 30um und besonders bevorzugt von weniger als 20um auf. Diese Klebschicht 15 besteht vorzugsweise aus einem auf Epoxid, Acryl, Silicon, PMMA, PDMS, etc. basiertem Kleber und kann auch aus demselben Material wie die Hauchdünne Schutzschicht bestehen. Die Klebschicht 15 kann entweder auf das Wärmeleitelement 8, 9 und/oder auf die Flächen des Sensorelements 1 durch zum Beispiel Spray-Coating-, Tauch-, Laminier-, etc. Verfahren aufgebracht werden.

Figur 3c zeigt den erfingdungsgemässen WFS, bei der das thermoelektrische Material vom n-Typ 3 und das thermoelektrische Material vom p-Typ 4 in Form von Thermosäulen durch eine Polymerfolie, einer Matrix 2 hindurchgeführt respektive in die Matrix 2 eingebettet sind, wobei die der kalten und warmen Seite zugewandten Stirnflächen der Thermosäulen 3,4 nicht von der Matrix 2 umgeben sind.

Die weiteren Elemente eines Wärmeflusssensors sind zwischen zwei thermischen Grenzflächen angeordnet. In der Matrix 2, einem Hüllmaterial, befinden sich die thermoelektrischen Materialien vom n-Typ 3 resp. p-Typ 4 in der Form von parallel zueinander und orthogonal zu den Grenzflächen ausgerichteten Säulen (Thermosäulen). In den meisten Fällen (Serienschaltung) sind die Thermosäulen 3, 4 in abwechselnder Reihenfolge (p- und n-Säulen alternierend) in einer Matrix 2 angeordnet resp. eingebettet. Jede Thermosäule 3, 4 ist sowohl eine elektrische als auch eine thermische Verbindung zwischen den beiden thermischen Grenzflächen. Diese Thermosäulen 3, 4 sind auf ihren Stirnseiten, d. h. den Seiten, welche den thermischen Grenzflächen zugewandt sind je nach Anwendungsbedarf elektrisch in Serie oder parallel mittels elektrischer Schaltverbindungen 5 verbunden. Im Fall einer Serienschaltung verbindet die elektrische Schaltverbindung 5 jeweils eine Säule 3 mit einer Säule 4, immer um eine Position versetzt.

Die Matrix 2 kann aus einem Kunststoff, z. B. PI, PET, PES, PEEK aber auch aus Glas, Si, SiO2, PCB-Werkstoffen o. a. bestehen.

Dabei können die thermoelektrisch aktiven Materialien aus Cu, Ni, Konstantan (eine Legierung von Cu und Ni) oder anderen thermoelektrisch aktiven Materialien wie Bi2Te3, SbTe, SbBiTe, Se,Bi,Te, Cu, Ni, SbBi, ZnBi, ZnTe, ZnSb o. a. bestehen.

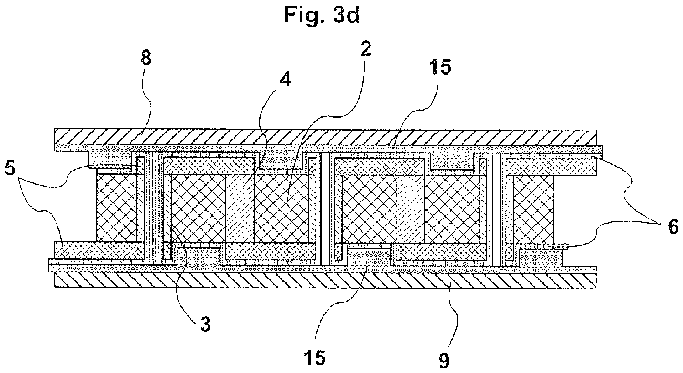

Figur 3d zeigt eine Ausführungsform bei der mindestens eine Thermosäule 3, 4 hohl ist. Im Falle einer hohlen Säule gibt es Ausführungsformen bei denen die innere, dem Hohlraum zugewandte Seite mit einer hauchdünnen Schutzschicht 6 überzogen, oder der Hohlraum vollständig mit dieser Schutzschicht ausgefüllt ist. Um die Invasivität weiter zu verringern, kann der Hohlraum, durch ein thermisch leitendes jedoch elektrisch isolierendes wie einen thermisch leitfähigen Kleber gefüllt sein.

### Bezugszeichenliste:

- 1: Sensorelement
- 2: Matrix
- 3: Halbleiter n-Typ
- 4: Halbleiter p-Typ
- 5: Schaltverbindung
- 6: elektrische Isolation
- 7: Polyimid (Kapton)
- 8: Wärmeleitelement kalte Seite
- 9: Wärmeleitelement warme Seite
- 10: Konstantan
- 11: Kupfer
- 12: Wärmeflusssensor
- 13: Wärmefluss [W]
- 14: Luft
- 15: thermisch leitfähiger Kleber
- 16: Messobjekt (Wand)
- 17: Sensorkabel
- 18: funktionale Schicht
- T1: Temperatur der warmen Seite
- T2: Temperatur der kalten Seite

## Patentansprüche

1. Wärmeflusssensor, umfassend ein aktives Sensorelement, welches thermoelektrische Materialien vom n-Typ (3) sowie p-Typ (4) in der Form von parallel zueinander und orthogonal zu den Grenzflächen ausgerichteten Thermosäulen (3, 4) umfasst, wobei die Thermosäulen (3, 4) in einer Matrix (2) als Hüllmaterial eingebettet sind und die Thermosäulen (3, 4) auf ihren Stirnseiten mittels elektrischen Schaltverbindungen (5) elektrisch verbunden sind und das aktive Sensorelement auf der kalten Seite und auf der heissen Seite mit einem thermisch hochleitfähigen Wärmeleitelement (8, 9) versehen ist, **dadurch gekennzeichnet, dass** das Sensorelement (1) mit einer hauchdünnen,0,1 um bis 20 um dicken, elektrisch stark isolierenden, chemisch inerten und stark haftenden Schutzschicht (6) überzogen resp. von dieser umhüllt ist, wobei die den Wärmeleitelementen (8, 9) zugewandten Abschnitte der Matrix (2) und der Schaltverbindungen (5) bedeckt sind und das Sensorelement (1) somit eine reduzierte thermische Invasivität bzw. reduzierten thermischen Widerstand aufweist.

2. Wärmeflusssensor nach Anspruch 1, **dadurch gekennzeichnet, dass** die Wärmeleitelemente (8, 9) rechtwinklig zum Wärmefluss (13) auf der Schutzschicht (6) des Sensorelements (1) mittels eines Klebers (15) aufgeklebt sind.

3. Wärmeflusssensor nach Anspruch 2, bei dem der Kleber (15) aus demselben Material wie die hauchdünne Schutzschicht besteht.

4. Wärmeflusssensor nach Anspruch 1, **dadurch gekennzeichnet, dass** die Matrix (2) eine Folie ist.

5. Wärmeflusssensor nach einem der Ansprüche 1 bis 4, **dadurch gekennzeichnet, dass** mindestens eine Thermosäule innen hohl ist.

6. Wärmeflusssensor nach Anspruch 5, **dadurch gekennzeichnet, dass** die Innenwand der hohlen Thermosäulen mit einer hauchdünnen Schutzschicht überzogen ist, oder dass diese vollständig mit dem Material der Schutzschicht oder einem anderen elektrisch isolierendem Material gefüllt ist.

7. Wärmeflusssensor nach einem der Ansprüche 1 bis 6, **dadurch gekennzeichnet, dass** die Dicke der Schutzschicht (6) vorzugsweise 0.1 bis 10 um, und noch bevorzugter 0.1 bis 7 um beträgt.

8. Wärmeflusssensor nach einem der Ansprüche 1 bis 7, **dadurch gekennzeichnet, dass** die Schutzschicht (6) aus einem Schutzlack, einem Epoxid, einem Silikon oder Keramik gebildet ist.

9. Wärmeflusssensor nach einem der Ansprüche 2, 3 oder 5 bis 8, **dadurch gekennzeichnet, dass** die Dicke der Kleberschicht 1 um bis 100 um, vorzugsweise 5 um bis 30 um beträgt.

10. Wärmeflusssensor nach einem der Ansprüche 1 bis 9, **dadurch gekennzeichnet, dass** das Wärmeleitelement (8, 9) aus Cu, Au, Pd, Al, Sb, Stahl oder einem anderen Metall besteht oder aus Keramik oder Graphit gebildet ist oder eine Kombination von diesen Materialien ist.

11. Wärmeflusssensor nach einem der Ansprüche 1 bis 10, **dadurch gekennzeichnet, dass** das Wärmeleitelement mit einer funktionellen Schicht (18) überzogen ist.

12. Wärmeflusssensor nach Anspruch 11, bei dem die funktionelle Schicht (18) elektromagnetische Strahlung im Wellenlängenbereich 0.1 um bis 10.6 um stark absorbiert, besonders bevorzugt 0,1 bis 0,4 um und/oder 1,5 bis 10,6 um.

13. Wärmeflusssensor nach Anspruch 13, bei dem die funktionelle Schicht (18) aus Biomolekülen oder Biozellen, beispielsweise aus Antikörpern [S.9, Z.6-7] besteht.

14. Wärmeflusssensor nach einem der Ansprüche 1 bis 13 bei dem das Wärmeleitelement (8, 9) so ausgeführt ist, dass es die Dimensionen des Sensorelements (1) überragt und eine hohe Wärmekapazität aufweist.

15. Wärmeflusssensor nach einem der Ansprüche 1 bis 14 bei dem das Wärmeleitelement (8, 9) in flächige Segmente unterteilt ist.

## Claims

1. A heat flow sensor, comprising an active sensor element, which comprises thermoelectric materials of the n-type (3) and the p-type (4) in the form of thermopiles (3, 4) orientated in parallel with one another and normal to the interfaces, wherein the thermopiles (3, 4) are embedded in a matrix (2) as a cladding material and the thermopiles (3, 4) are electrically connected on the end faces by means of electrical connections (5) and the active sensor element is provided on the cold side and on the hot side with a thermally highly conductive heat-conducting element (8, 9), **characterised in that** the sensor element (1) is coated or clad with an extremely thin, 0.1 µm to 20 µm thick, electrically highly insulating, chemically inert and highly adhesive protective layer (6), wherein the sections of the matrix (2) facing the heat-conducting elements (8, 9) and the connections (5) are covered and the sensor element (1) thus has a reduced thermal invasiveness or reduced thermal resistance.

2. The heat flow sensor according to claim 1, **characterised in that** the heat-conducting elements (8, 9) are adhesively bonded by means of an adhesive (15) on the protective layer (6) of the sensor element (1) at right angles to the heat flow (13).

3. The heat flow sensor according to claim 2, wherein the adhesive (15) is made of the same material as the extremely thin protective layer.

4. The heat flow sensor according to claim 1, **characterised in that** the matrix (2) is a foil.

5. The heat flow sensor according to any one of claims 1 to 4, **characterised in that** at least one thermopile is internally hollow.

6. The heat flow sensor according to claim 5, **characterised in that** the inner wall of the hollow thermopiles is coated with an extremely thin protective layer, or that the latter are completely filled with the material of the protective layer or another electrically insulating material.

7. The heat flow sensor according to any one of claims 1 to 6, **characterised in that** the thickness of the protective layer (6) preferably amounts to 0.1 to 10 µm, and still more preferably 0.1 to 7 µm.

8. The heat flow sensor according to any one of claims 1 to 7, **characterised in that** the protective layer (6) is formed from a protective lacquer, an epoxide, a silicone or ceramic.

9. The heat flow sensor according to any one of claims 2, 3 or 5 to 8, **characterised in that** the thickness of the adhesive layer amounts to 1 µm to 100 µm, preferably 5 µm to 30 µm.

10. The heat flow sensor according to any one of claims 1 to 9, **characterised in that** the heat-conducting element (8, 9) is made of Cu, Au, Pd, Al, Sb, steel or another metal or is formed from ceramic or graphite or is a combination of these materials.

11. The heat flow sensor according to any one of claims 1 to 10, **characterised in that** the heat-conducting element is coated with a functional layer (18).

12. The heat flow sensor according to claim 11, wherein the functional layer (18) strongly absorbs electromagnetic radiation in the wavelength range from 0.1 µm to 10.6 µm, particularly preferably 0.1 to 0.4 µm and/or 1.5 to 10.6 µm.

13. The heat flow sensor according to claim 12, wherein the functional layer (18) is made of biomolecules or biocells, for example of antibodies.

14. The heat flow sensor according to any one of claims 1 to 13, wherein the heat-conducting element (8, 9) is constituted such that it projects beyond the dimensions of the sensor element (1) and has a high heat capacity.

15. The heat flow sensor according to any one of claims 1 to 14, wherein the heat-conducting element (8, 9) is divided into surface segments.

## Revendications

1. Capteur de flux thermique comprenant un élément capteur actif, lequel comprend des matières thermoélectriques de type n (3), ainsi que de type p (4), sous la forme de thermopiles (3, 4) orientées à la parallèle les unes par rapport aux autres et de manière orthogonale aux surfaces limites, les thermopiles (3, 4) étant incorporées dans une matrice (2) en tant que matière d'enveloppe et les thermopiles (3, 4) étant électriquement connectées sur leurs faces frontales à l'aide de connexions de couplage (5) électrique et l'élément capteur actif étant doté sur le côté chaud et sur le côté froid d'un élément thermoconducteur (8, 9) hautement conducteur de chaleur, **caractérisé en ce que** l'élément capteur (1) est recouvert d'une couche protectrice (6) ultrafine, d'une épaisseur de 0,1 µm à 20 µm assurant une forte isolation électrique, chimiquement inerte et fortement adhérente, respectivement est enveloppé dans celle-ci, les portions de la matrice (2) et des connexions de couplage (5) qui font face aux éléments thermoconducteurs (8, 9) étant recouvertes et l'élément capteur (1) faisant ainsi preuve d'une capacité réduite d'invasion thermique ou d'une résistance thermique réduite.

2. Capteur de flux thermique selon la revendication 1, **caractérisé en ce que** les éléments thermoconducteurs (8, 9) sont collés à angle droit du flux thermique (13) sur la couche protectrice (6) de l'élément capteur (1) à l'aide d'une colle (15).

3. Capteur de flux thermique selon la revendication 2, sur lequel la colle (15) est constituée de la même matière que la couche protectrice ultrafine.

4. Capteur de flux thermique selon la revendication 1, **caractérisé en ce que** la matrice (2) est un film.

5. Capteur de flux thermique selon l'une quelconque des revendications 1 à 4, **caractérisé en ce qu'**au moins une thermopile est creuse à l'intérieur.

6. Capteur de flux thermique selon la revendication 5, **caractérisé en ce que** la paroi intérieure des thermopiles creuses est revêtue d'une couche protectrice ultrafine ou **en ce qu'**elle est entièrement remplie de la matière de la couche protectrice ou d'une autre matière électriquement isolante.

7. Capteur de flux thermique selon l'une quelconque des revendications 1 à 6, **caractérisé en ce que** l'épaisseur de la couche protectrice (6) est de préférence de 0.1 à 10 µm et de manière encore plus préférée, de 0.1 à 7 µm.

8. Capteur de flux thermique selon l'une quelconque des revendications 1 à 7, **caractérisé en ce que** la couche protectrice (6) est formée d'un vernis protecteur, d'une résine époxy, d'un silicone ou de céramique.

9. Capteur de flux thermique selon l'une quelconque des revendications 2, 3 ou 5 à 8, **caractérisé en ce que** l'épaisseur de la couche de colle est de 1 µm à 100 µm, de préférence de 5 µm à 30 µm.

10. Capteur de flux thermique selon l'une quelconque des revendications 1 à 9, **caractérisé en ce que** l'élément thermoconducteur (8, 9) est constitué de Cu, d'Au, de Pd, d'Al, de Sb, d'acier ou d'un autre métal ou est formé en céramique ou en graphite ou est une association desdites matières.

11. Capteur de flux thermique selon l'une quelconque des revendications 1 à 10, **caractérisé en ce que** l'élément thermoconducteur est revêtu d'une couche fonctionnelle (18).

12. Capteur de flux thermique selon la revendication 11, sur lequel la couche fonctionnelle (18) absorbe fortement un rayonnement électromagnétique dans la gamme d'ondes de 0.1 µm à 10.6 µm, de manière particulièrement préférée de 0,1 à 0,4 µm et/ou de 1,5 à 10,6 µm.

13. Capteur de flux thermique selon la revendication 12, sur lequel la couche fonctionnelle (18) est constituée de biomolécules ou de biocellules, par exemple d'anticorps.

14. Capteur de flux thermique selon l'une quelconque des revendications 1 à 13, sur lequel l'élément thermoconducteur (8, 9) est réalisé de sorte à déborder par delà les dimensions de l'élément capteur (1) et à faire preuve d'une capacité thermique élevée.

15. Capteur de flux thermique selon l'une quelconque des revendications 1 à 14, sur lequel l'élément thermoconducteur (8, 9) est divisé en segments plats.
